# EUROPEAN PATENT SPECIFICATION

(11) **EP 2 873 769 B1**
(45) Date of publication and mention of the grant of the patent: **05.12.2018**
(21) Application number: 14186571.7
(22) Date of filing: 26.09.2014
(51) Int. Cl.: D21B 1/02, D21B 1/32, D21B 1/34

(54) **Drum pulper**
Trommelstofflöser
Désintégrateur à tambour

(30) Priority: 15.11.2013 FI 20136120
(43) Date of publication of application: 20.05.2015
(73) Proprietor: Valmet Technologies, Inc., 02150 Espoo (FI)
(72) Inventor: Kankaanpää, Veikko, 02150 Espoo (FI); Oksman, Risto, 02150 Espoo (FI)
(74) Representative: Kolster Oy Ab

(56) References cited:
- EP-A1- 0 164 428
- DE-A1-102012 205 721
- GB-A- 1 525 947
- GB-A- 2 122 111

## Description

### FIELD OF THE INVENTION

The present invention relates to a processing of fibre material, particularly recycled fibre material, intended to be used for paper or paperboard manufacturing. In particular, the invention relates to a drum pulper used for slushing recycled fibre material.

### BACKGROUND OF THE INVENTION

For recycled fibre material originating for example from old corrugated containers or mixed waste paper to be reused, the recycled fibre material must be slushed. The slushing of the recycled fibre material takes place in a pulping system, which may comprise one or more pulpers.

The fibre material to be reused for paper or paperboard manufacturing is fed to a pulper where the recycled fibre material is slushed and mixed with water so as to form a fibre pulp suspension consisting of fibre material and water mixed together. A drum pulper is a type of pulper that may be used to slush recycled fibre material. The drum pulper comprises a drum which rotates in a substantially horizontal position or in a position slightly inclined downwards from the material feed end to the material exit end. The recycled fibre material to be slushed in the drum pulper rises up in the rotating drum and, at some point, falls down to the bottom of the drum, whereby the fibre material hits the bottom of the drum and becomes slushed. Typically, a drum pulper comprises a slushing part as a first part of the drum. The slushing part of the drum is followed by a screening part for recovering fibres from the slushed fibre material.

GB-publication 1525947 A discloses a drum pulper according to the preamble of claim 1.

### BRIEF DESCRIPTION OF THE INVENTION

An object of the present invention is to provide a novel drum pulper for slushing recycled fibre material.

The invention is characterized by the features of the independent claim. Further features of the invention are disclosed in the dependent claims.

### BRIEF DESCRIPTION OF THE DRAWINGS

In the following the invention will be described in greater detail by means of preferred embodiments with reference to accompanying drawings, in which
Figure 1 shows schematically a side view of a drum and a drum pulper;
Figure 2 shows schematically a second drum of a drum pulper;
Figure 3 shows schematically a third drum of a drum pulper.
Figure 4 shows schematically a fourth drum of a drum pulper; and
Figures 5, 6 and 7 show a detail of the drums of Figures 3 and 4.

For the sake of clarity, the figures show the embodiments in a simplified manner. In the figures, like reference numerals identify like elements.

### DETAILED DESCRIPTION OF THE INVENTION

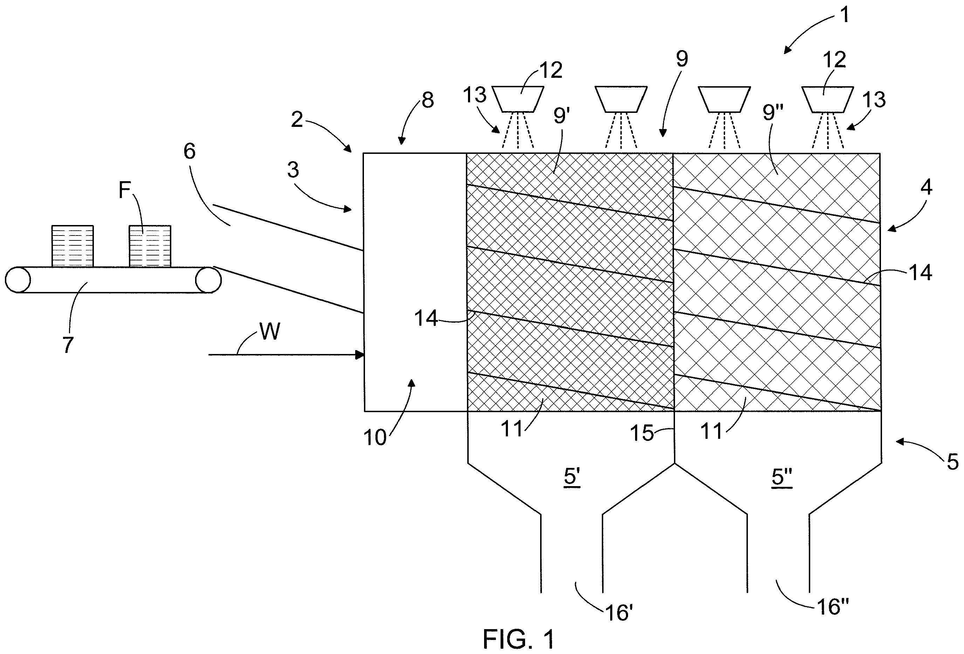

Figure 1 shows schematically a side view of a drum pulper 1 for slushing, i.e. disintegrating, recycled fibre material, such as mixed waste paper or old corrugated containers. The drum pulper 1 of Figure 1 comprises a rotatable drum 2. The drum 2 comprises a casing 10 and a first end 3 or a feed end 3, through which recycled fibre material F to be slushed and water W is fed into the drum 2. The feed of water is denoted by arrow W. The drum 2 also comprises a second end 4 or a discharge end 4 at the opposite end of the drum 2, through which second end 4 a reject portion of the recycled fibre material F fed into the drum 2 is discharged out of the drum 2 for further processing. Below the drum 2 there is a vat 5 for receiving fibres recovered from the recycled fibre material F fed into the drum 2. The recycled fibre material is fed into the drum 2 through a feed channel 6, into which feed channel 6 the recycled fibre material is supplied by a conveyor 7 or other suitable device. The recycled fibre material F to be fed into the drum 2 is in solid form, such as in the form of whole bales or loose material not yet being mixed with water, Figure 1 representing the recycled fibre material F having a form of whole recycled fibre material bales.

In the drum pulper 1 the recycled fibre material F is slushed by rotating the drum 2 by a rotating device, which is not shown in Figure 1 for the sake of clarity. The drum 2 is positioned either substantially horizontally, as shown in Figure 1, or in a slightly downwards inclined position from the direction of the feed end 3 towards the discharge end 4. The drum 2 comprises a slushing part 8 at the feed end 3 of the drum 2, followed by a screening part 9. At the slushing part 8 the casing 10 of the drum 2 is solid or unbroken, whereas at the screening part 9 the casing 10 of the drum 2 is provided with openings 11.

The recycled fibre material F and water W are fed into the drum 2 through the feed end 3 of the drum 2 so that the fibre material and the water enter the slushing part 8. When the drum 2 is rotated, the fibre material in the slushing part 8 rises up in the rotating drum 2 and, finally, due to gravitational force, falls back down and hits a bottom of the drum 2, whereby the fibre material is slushed, meaning that fibres of the fibre material start to separate from each other so that single fibres, fibre bundles and/or paper, paperboard and/or recycled fibre material bale parts of different sizes form inside the drum. In the slushing part 8 of the drum 2 the fibre material and water also start to mix with each other so as to form a fibre pulp suspension. Because the casing 10 of the drum 2 is solid or unbroken at the slushing part 8, the fibres, fibre bundles and/or different fibre material parts mentioned above do not exit the drum 2 at the slushing part of the drum 2.

From the slushing part 8 the fibre material F and water W move in the drum 2 to the screening part 9. In the screening part 9 the slushing of the fibre material continues, i.e. the fibre material in the screening part 9 also rises up in the rotating drum 2 and falls back down and hits a bottom of the drum 2 due to the gravitational force, the fibre material being thus further slushed. Since the casing 10 of the drum 2 on the screening part 9 is provided with openings 11, fibres, fibre bundles and/or fibre material parts of different sizes already separated from the recycled fibre material may leave the drum 2 through the openings 11 and go to the vat 5. At the screening part 9 of the drum 2 the drum pulper 1 may also comprise nozzles 12 for spraying water sprays 13 in order to enhance the separation of the fibres, fibre bundles and/or fibre material parts from the fibre pulp suspension and the transfer of them into the vat 5. The portion of the recycled fibre material which enters the vat 5 provides an accept portion of the drum pulper 1, which may be used for paper or board manufacturing, for example. The portion of the recycled fibre material that has not passed through the openings 11 in the screening part 9 into the vat 5 provides a reject portion of the drum pulper 1 and is transferred from the drum 2 through the discharge end 4 for reject treatment.

Figure 1 also shows, in the screening part 9, lifters 14, which promote the rise of the fibre material when the drum 2 is rotated. The lifters 14 are arranged in an inclined position relation to the longitudinal axis of the drum 2 for enhancing the movement of the fibre material from the direction of the feed end 3 towards the discharge end 4, the inclined lifters 14 causing the fibre material which has risen up with the lifter to fall down to a position closer to the discharge end 4 in relation to the position in which the fibre material started to rise up. The lifters 14 thus also enhance the movement of the fibre material towards the discharge end 4 in the drum 2, whereby it is not only the process pressure and the effect of water and fibre material flows that cause the movement of fibre material towards the discharge end 4. Similar lifters 14 may be arranged to the slushing part 8 too.

In the drum pulper 1 of Figure 1, the length of the slushing part 8 of the drum 2 is limited in relation to the total length of the drum 2 such that the length of the slushing part 8 is about twenty per cent of the total length of the drum 2, meaning that the length of the screening part 9 of the drum 2 is about eighty per cent of the total length of the drum 2. In the prior art the length of the slushing part 8 of the drum 2 has been dimensioned to be about two thirds or about 65 to 70% of the total length of the drum, whereby the length of the screening part 9 has traditionally been about a third or about 30 to 35% of the total length of the drum.

This prior art dimensioning of the drum parts has originated from a consideration that the slushing stage and the screening stage are separate stages such that the fibre material fed into the drum is slushed entirely in the slushing part of the drum. Furthermore, it has been considered in the prior art that the fibres, fibre bundles and/or fibre material parts of different sizes which are separated from the recycled fibre material would increase the slushing effect by increasing internal friction in the material to be slushed. However, it has now been discovered that the recycled fibre material is in fact so heterogeneous that it actually comprises material portions which will slush at very different rates. It has now also been discovered that the energy used for slushing does not distribute evenly in the material to be slushed. These together cause some parts of the material to slush in a very short time, whereas the slushing of other parts of the material may take a much longer time. By limiting the portion of the slushing part 8 in the total length of the drum 2 and by increasing the portion of the screening part 9 in the total length of the drum 2, the fibres, fibre bundles and/or fibre material parts already separated from the rest of the fibre material still being under slushed may flow out of the drum 2 to the vat 5 already at a very early stage in relation to the total length of the drum 2. This has also the effect that the fibre material still in the drum will be slushed more effectively because the free fibres, fibre bundles and/or fibre material parts mentioned above no longer remain in the drum for a long time and thereby attenuate or damp the effect of the impacts caused to the fibre material to be slushed. This means that the energy to be used for slushing can be more effectively directed to a portion of the fibre material which has not been slushed, whereby a specific energy consumption (kWh/t) of the slushing will decrease, because energy is no longer used for processing fibre material portions already separated from the fibre material portion not yet slushed. Also, because the amount of the fibre material in the drum starts to decrease already very close to the feed end 3 of the drum 2, more fibre material can be fed into the drum, meaning that the production capacity of the drum increases. Also fibre flocculation will be minimized when the free fibres, fibre bundles and/or fibre material parts are removed from the drum 2 as soon as they have separated from the rest of the fibre material.

According to an embodiment of a drum 2, the length of the slushing part 8 of the drum 2 is at most fifty per cent of the total length of the drum 2, whereby the length of the screening part 9 is at least fifty per cent of the total length of the drum 2. The length of the screening part 9 may thus be 50 to 100 per cent of the total length of the drum 2.

According to another embodiment of a drum 2, the length of the slushing part 8 of the drum 2 is at most thirty per cent of the total length of the drum 2, whereby the length of the screening part 9 is at least seventy per cent of the total length of the drum 2.

According to a further embodiment of a drum 2, the length of the slushing part 8 of the drum 2 is at most ten per cent of the total length of the drum 2, whereby the length of the screening part 9 is at least ninety per cent of the total length of the drum 2.

The shorter the slushing part 8, the longer is the screening part 9 and the sooner the fibres, fibre bundles and/or fibre material parts already separated from the recycled fibre material under slushing may flow out of the drum 2. In this embodiment the fibres, fibre bundles and/or fibre material parts separated from the rest of the recycled fibre material under slushing may flow out of the drum 2 as soon as they have separated from the recycled fibre material under slushing.

The total length of the drum 2 may be for example 6 to 80m, preferably 10 to 50m. The diameter of the drum may be for example 2 to 6m, preferably 3 to 5m.

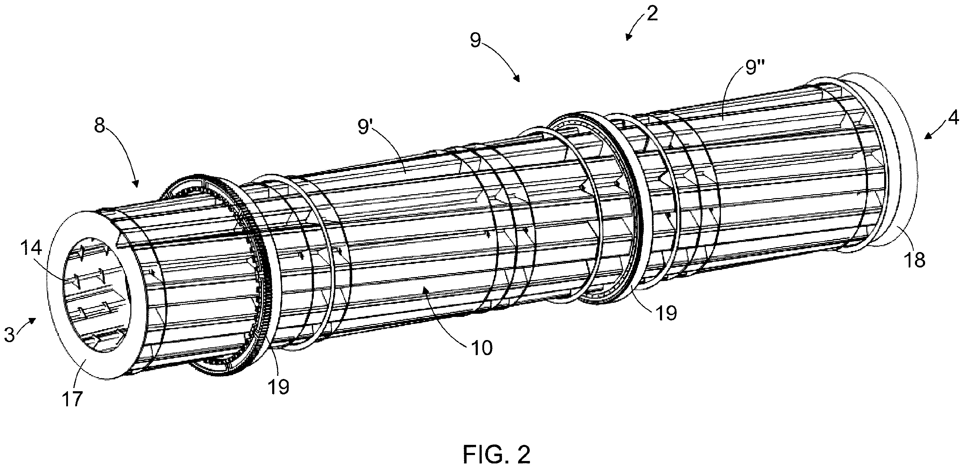

According to an embodiment of the drum 2, a size of the openings 11 in the casing 10 of the drum 2 may be constant on the entire length of the screening part 9 of the drum 2. According to another embodiment of the drum 2, the size or area of the openings 11 may be arranged to increase from the direction of the feed end 3 of the drum 2 towards the discharge end 4 of the drum 2, whereby the size of the openings 11 may increase either continuously or in a stepwise manner. Figure 2 shows an embodiment wherein the screening part 9 comprises two successive screening part portions 9', 9", i.e. a first screening part portion 9' located on the feed end 3 side of the drum 2 and a second screening part portion 9" located on the discharge end 4 side of the drum 2. The size or area of the openings 11 in the first screening part portion 9' is arranged to be smaller than in the second screening part portion 9", meaning that the openings 11 in the casing 10 of the drum 2 are of different sizes on different portions 9', 9" of the screening part 9, whereby fibres, fibre bundles and/or fibre material parts of different sizes can be separated from the fibre material in different portions of the screening part 9.

If the recycled fibre material to be slushed is material that becomes slushed substantially easily, the fibres, fibre bundles and/or different fibre material parts separated from the fibre material to be slushed can be recovered already at a beginning of the screening part 9 or at a feed end of the screening part 9 even if the size or area of the openings 11 were small. The portion of the fibre material which does not become slushed so easily will in turn be subjected to slushing longer, whereby an accept portion comprising fibres, fibre bundles or fibre material parts having uniform size and quality properties can be achieved so that the fibre material becomes extremely well slushed. When the size or area of the openings 11 is arranged to increase from the direction of the feed end 3 towards the discharge end 4, high recovery of fibres and low fibre loss can be ensured. Examples of recycled fibre material which can be slushed substantially easily are European OCC (Old Corrugated Containers) and Mixed Waste.

The shape and size of the openings 11 may vary in many ways. Hence the cross-section of the openings 11 in a direction of a plane of the casing 10 may be round or elongated, for example. In a direction through the casing 10 the openings 11 may have a cylindrical, conical or bevelled form. If the shape of the openings 11 is round, the diameter of the opening 11 may be for example 1 to 30mm, preferably 2 to 20mm and more preferably 3 to 15mm. Given that the size of the openings 11 in the screening part 9 is arranged to increase from the direction of the feed end 3 of the drum 2 towards the discharge end 4, the diameter of the openings 11 closer to the feed end 3 of the drum 2 may be for example 2 to 12mm, increasing to a value of 4 to 16mm and further to a value of 6 to 20mm, when proceeding towards the discharge end 4 of the drum 2. Cylindrical openings may also comprise, in the direction going through the casing 10, two or more successive portions having a different diameter.

If the shape of the openings 11 is elongated, a width of the openings 11 may be for example 1 to 15mm, preferably 2 to 10mm. A length of the elongated openings may be 10 to 120mm, preferably 15 to 80mm and more preferably 20 to 60mm. An elongated, narrow opening has good screening properties and, due to its large open surface area, provides high capacity.

A total open area of the screening part 9 provided by the open areas of the openings 11 may vary between 10 and 40%. The total open area of the screening part 9 is thus quite high, which provides a high capacity for the drum. However, because the size of the individual openings is limited, an entry of foreign materials, such as plastic, into the accept portion of the fibre material may be prevented.

Following the construction of the screening part 9 of the drum 2, the vat 5 is also arranged to comprise, in the longitudinal direction of the drum 2, two successive portions 5', 5", i.e. a first vat portion 5' and a second vat portion 5", which are separated from each other by a partition wall 15. The first vat portion 5' is arranged to receive fibres recovered from the first screening part portion 9' and the second vat portion 5" is arranged to receive fibres recovered from the second screening part portion 9". Fibres recovered from the different screening part portions 9', 9" of the drum 2 thus form separate fibre pulp suspension fractions in different vat portions 5', 5" and the fractions can be discharged from the vat 5 to further process stages through output channels 16', 16" of the vat portions 5', 5".

Consistency of the fibre pulp suspension in the slushing part 8 is typically 15 to 25% and in the screening part 9 5 to 25%. Such consistencies typically provide the accept portion in the vat 5 with a consistency of 4 to 4.5%. With a drum as disclosed above the consistency of the accept portion may be adjusted to a range from one to five per cent. If the slushing part 8 of the drum 2 is very short, and the openings 11 in the screening part 9 either immediately after the slushing part 8 or on the entire length of the screening part 9 are small, either a portion of the accept portion or the entire accept portion with a consistency of about 1 to 1.5% may be provided. The accept portion having a consistency of 1 to 1.5% is so fine-graded that it may be supplied directly to fine screening, and coarse screening may be bypassed.

Figure 2 shows schematically a second drum 2 which may be used in a drum pulper 1 for slushing recycled fibre material. The drum 2 comprises a feed end 3 and a discharge end 4. The drum 2 comprises also, at the feed end 3 of the drum 2, a slushing part 8, which is followed by a screening part 9. At the slushing part 8 a casing 10 of the drum 2 is solid or unbroken, whereas at the screening part 9 the casing 10 of the drum 2 is provided with openings (not visible in Figure 2). Figure 2 also discloses a first end ring 17 at the feed end 3 of the drum 2 and a second end ring 18 at the discharge end 4 of the drum 2, the end rings 17, 18 supporting the structure of the drum 2 at the ends of the drum 2. Figure 2 also discloses support rings 19 at a centre part of the drum 2, which support rings 19 both support the structure of the drum 2 at the centre part of the drum 2 and provide a support of the drum 2 to a bearing support forming a part of equipment for rotating the drum 2.

Similarly as in the drum 2 of Figure 1, the length of the slushing part 8 of the drum 2 in Figure 2 is very short in relation to the total length of the drum 2. More precisely, in the embodiment of Figure 2 the length of the slushing part 8 of the drum 2 is only about a sixth, or about 16%, of the total length of the drum 2, whereby the length of the screening part is about five sixths or about 84% of the total length of the drum 2.

Figure 2 also discloses a number of lifters 14 arranged both in the slushing part 8 and the screening part 9 of the drum 2. In the embodiment of Figure 2 each lifter 14 is a uniform part of the casing 10 of the drum 2, or, in other words, the casing 10 provides the lifters 14. According to an embodiment, in which the casing 10 provides the lifters 14, the lifters 14 may, at a specific portion of the drum 2, be made of the same casing billet as the actual casing is made of. The lifters 14 may be formed for example by bending the casing billet or by embossing the casing billet. The lifters 14 are thus formed as protrusions of the casing 10, which protrusions are directed towards the inner volume of the drum 2.

Unlike in the embodiment of Figure 2, the lifters 14 may also be manufactured from plate parts fastened to an inner surface of the drum 2.

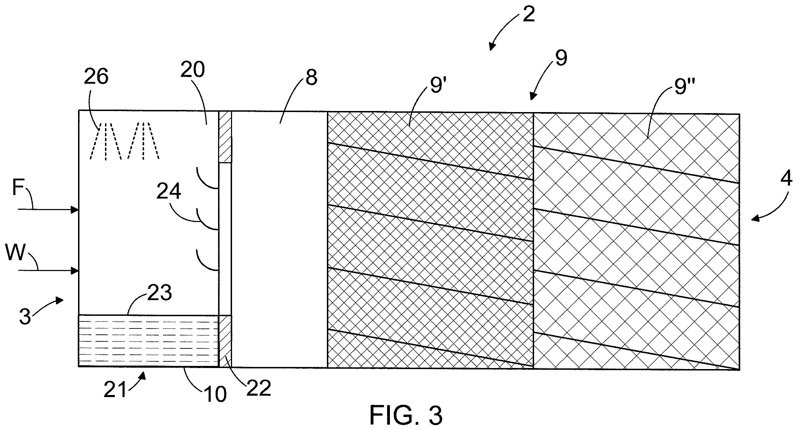

Figure 3 shows schematically, partly in cross-section, a third drum 2 which may be used in a drum pulper 1 for slushing recycled fibre material. The drum 2 comprises a feed end 3 and a discharge end 4 as well as a slushing part 8 followed by a screening part 9. The drum 2 in Figure 3 further comprises a wetting part 20 preceding the slushing part 8, the casing 10 at the wetting part being solid or unbroken. The wetting part 20 is separated from the slushing part 8 with a ring element 22, which provides a ring-like partition wall between the wetting part 20 and the slushing part 8, the ring element 22 being arranged to extend from the inner surface of the casing 10 for some distance towards a centre axis of the drum 2. On a lower portion of the drum 2, the casing 10 on the wetting part 20 together with the ring element 22 and the first end 3 of the drum 2 define a wetting zone 21, where the fluid level 23 is higher than in other parts of the drum 2.

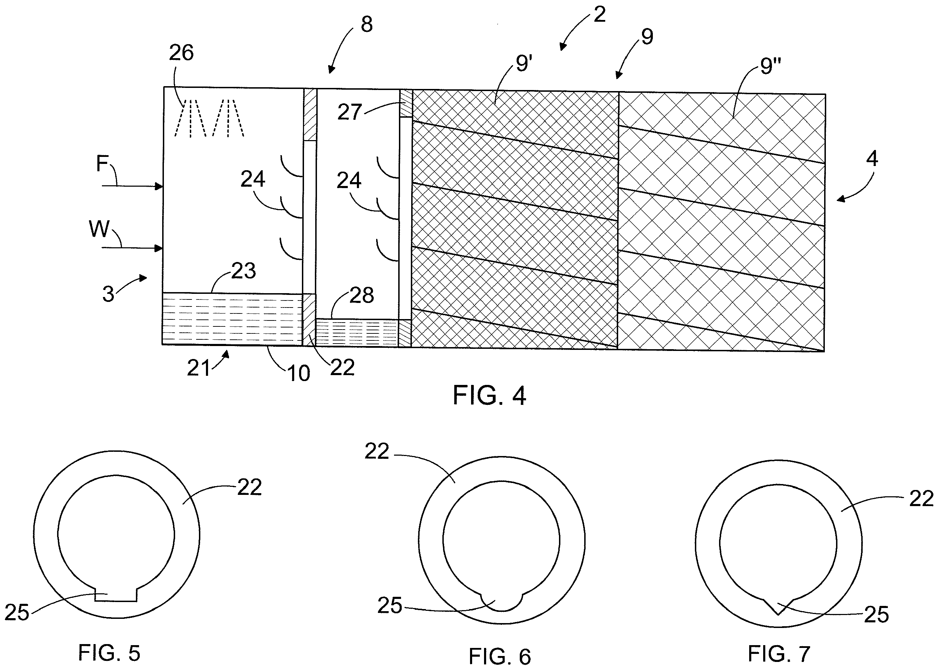

In the wetting zone 21 of the wetting part 20 the high fluid level 23 provides a volume of fluid which causes the recycled fibre material fed into the drum 2 (shown by arrow F) to become wetted efficiently before it flows onward into the slushing part 8 of the drum 2. The wetting part 20 may also comprise scoops 24 for transferring wetted fibre material into the slushing part 8. Additional water enhancing the wetting of the fibre material may be supplied into the wetting part for example by water sprays 26 or as an overflow through a supply trough. The ring element 22 may also comprise a cavity 25 or recess 25, the shape of which may be rectangle, a curved or a sharp peak pointed such that the sides of the sharp peak cavity 25 are arranged to converge towards the direction of the outer periphery of the ring element 22. These different shapes of the cavity 25 are disclosed in Figures 5, 6 and 7, wherein the ring element is shown as seen from the end of the drum. The cavity 25 provides an overflow which allows water to flow from the wetting part 20 onward in the drum 2. This water flow may also contain fibres, fibre bundles and/or fibre material parts of different sizes possibly separated from the recycled fibre material already in the wetting part 20. The shape of the cavity 25 may also differ from those presented above. It is also possible that there is no cavity at all.

When the fibre material which has become at least partly wetted already in the wetting part 20 enters the slushing part 8, the slushing of the material in the slushing part 8 is more effective and starts sooner, whereby the capacity of the drum 2 increases. Also the length of the slushing part 8 in relation to the total length of the drum 2 may be reduced. The wetting part 20 may also comprise lifters for intensifying wetting and slushing of the fibre material.

The height of the ring element 22 is dimensioned such that the wetting zone 21 provided in the wetting part 20 has a sufficiently large volume for effective wetting. The minimum height of the ring element 22 towards a centre axis of the drum in the cavity 25 may be for example 0.5 to 2m, preferably 0.6 to 1.6m or more preferably 0.8 to 1.2m.

Figure 4 shows schematically, partly in cross-section, a fourth drum 2 which may be used in a drum pulper 1 for slushing recycled fibre material. The drum 2 comprises a feed end 3 and a discharge end 4 as well as a slushing part 8 followed by a screening part 9. The drum 2 in Figure 4 further comprises a wetting zone 21 arranged at the beginning of the slushing part 8. The wetting zone 21 is separated from the rest of the slushing part 8 with a ring element 22, the casing 10 at the slushing part 8 together with the ring element 22 and the first end 3 of the drum 2 defining the wetting zone 21 on a lower portion of the drum 2, where the fluid level 23 is higher than in the rest of the drum 2. The wetting zone 21 may extend from the first end 3 of the drum 2 on a portion of the length of the slushing part 8 or on the entire length of the slushing part 8 in the longitudinal direction of the drum 2. In the embodiment of Figure 4 the slushing part 8 is thus arranged to provide a wetting zone 21 for wetting the recycled fibre material to be fed into the drum 2. The portion of the drum comprising the wetting zone 21 may also comprise lifters for intensifying wetting and slushing of the fibre material.

Figure 4 shows schematically also a second ring element 27 which is arranged between the slushing part 8 and the screening part 9 such that the second ring element 27 provides a ring-like partition wall between the slushing part 8 and the screening part 9. The general structure of the second ring element 27 may be similar to that of the ring element 22. The height of the second ring element 27 is dimensioned such that the fluid level 28 in the slushing part 8 between the wetting zone 21 and the screening part 9 is lower or the same as the fluid level 23 in the wetting zone 21. The slushing part 8 between the wetting zone 21 and the screening part 9 may also be provided with scoops 24 for transferring fibre material from the slushing part 8 to the screening part 9. A similar second ring element 27 may be arranged between the slushing part 8 and the screening part 9 in the drum 2 of Figure 3.

The invention and its embodiments are not limited to the examples described above but may vary within the scope of the claims.

## Claims

1. A drum pulper (1) for slushing recycled fibre material (F), the drum pulper (1) comprising a drum (2), the drum (2) comprising a casing (10) and a slushing part (8) followed by a screening part (9) in which the slushing of the fibre material (F) continues and in which fibres are recovered from the slushed fibre material, the casing (10) of the drum (2) being solid at the slushing part (8) and being provided with openings (11) at the screening part (9) allowing the fibres to flow out of the drum through the openings (2), the drum (2) further comprising a feed end (3) through which recycled fibre material (F) is fed into the drum (2) and a discharge end (4) through which a reject portion of recycled fibre material (F) is discharged out of a drum (2), the drum pulper (1) further comprising a vat (5) below the drum (2) for receiving fibres recovered from recycled fibre material (F), and wherein a length of the screening part (9) of the drum (2) is at least fifty per cent of a total length of the drum (2), **characterized in that** a size of the openings (11) in the screening part (9) is arranged to increase towards the discharge end of the screening part (9)

2. A drum pulper as claimed in claim 1, **characterized in that** the length of the screening part (9) of the drum (2) is at least seventy per cent, preferably at least ninety per cent, of the total length of the drum (2).

3. A drum pulper as claimed in claim 1 or 2, **characterized in that** the drum (2) comprises a wetting zone (21) for wetting recycled fibre material (F) fed into the drum (2), the wetting zone (21) comprising a wetting part (20) preceding the slushing part (8), the casing (10) at the wetting part being solid.

4. A drum pulper as claimed in any one of the preceding claims, **characterized in that** the screening part (9) of the drum (2) comprises at least two successive screening part portions (9', 9"), the size of the openings (11) in the casing (10) of the drum (2) being different at different portions (9', 9") of the screening part (9).

5. A drum pulper as claimed in any one of the preceding claims, **characterized in that** the drum (2) comprises a number of lifters (14) directed towards the inner volume of the drum (2).

6. A drum pulper as claimed in claim 4, **characterized in that** the vat (5) of the drum pulper (1) comprises a number of vat portions (5', 5") separated from each other, the number of the vat portions (5', 5") corresponding to the number of the screening part portions (9', 9") in the screening part (9) of the drum (2).

## Patentansprüche

1. Trommelauflöser (1) zum Schlämmen von recyceltem Fasermaterial (F), wobei der Trommelauflöser (1) eine Trommel (2) umfasst, wobei die Trommel (2) ein Gehäuse (10) und einen Schlämmteil (8) umfasst, auf den ein Siebteil (9) folgt, in dem das Schlämmen des Fasermaterials (F) fortgesetzt wird und in dem Fasern aus dem geschlämmten Fasermaterial zurückgewonnen werden, wobei das Gehäuse (10) der Trommel (2) an dem Schlämmteil (8) solide ist und an dem Siebteil (9) mit Öffnungen (11) versehen ist, damit die Fasern durch die Öffnungen (2) aus der Trommel herausfließen können, wobei die Trommel (2) weiterhin ein Zuführende (3), durch das recyceltes Fasermaterial (F) zu der Trommel (2) zugeführt wird, und ein Ausführende (4), durch das ein Ausschussteil des recycelten Fasermaterials (F) aus der Trommel (2) ausgeführt wird, umfasst, wobei der Trommelauflöser (1) weiterhin eine Wanne (5) unter der Trommel zum Aufnehmen von aus dem recyceltem Fasermaterial (F) wiedergewonnenen Fasern umfasst, und wobei die Länge des Siebteils (9) der Trommel (2) wenigstens fünfzig Prozent der Gesamtlänge der Trommel (2) ausmacht, **dadurch gekennzeichnet, dass** die Größe der Öffnungen (11) in dem Siebteil (9) derart vorgesehen ist, dass sie zu dem Ausführende des Siebteils (9) hin größer wird.

2. Trommelauflöser nach Anspruch 1, **dadurch gekennzeichnet, dass** die Länge des Siebteils (9) der Trommel (2) wenigstens siebzig Prozent und vorzugsweise wenigstens neunzig Prozent der Gesamtlänge der Trommel (2) ausmacht.

3. Trommelauflöser nach Anspruch 1 oder 2, **dadurch gekennzeichnet, dass** die Trommel (2) eine Benetzungszone (21) zum Benetzen von recyceltem Fasermaterial (F), das in die Trommel (2) eingeführt wird, umfasst, wobei die Benetzungszone (21) einen dem Schlämmteil (8) vorgeordneten Benetzungsteil (20) umfasst, wobei das Gehäuse (10) an dem Benetzungsteil solide ist.

4. Trommelauflöser nach einem der vorstehenden Ansprüche, **dadurch gekennzeichnet, dass** der Siebteil (9) der Trommel (2) wenigstens zwei aufeinander folgende Siebteilabschnitte (9', 9") umfasst, wobei die Größe der Öffnungen (11) in dem Gehäuse (10) der Trommel (2) verschieden ist an verschiedenen Abschnitten (9', 9") des Siebteils (9).

5. Trommelauflöser nach einem der vorstehenden Ansprüche, **dadurch gekennzeichnet, dass** die Trommel (2) eine Anzahl von Hebeeinrichtungen (14), die zu dem Innenvolumen der Trommel (2) gerichtet sind, umfasst.

6. Trommelauflöser nach Anspruch 4, **dadurch gekennzeichnet, dass** die Wanne (5) des Trommelauflösers (1) eine Anzahl von voneinander getrennten Wannenabschnitten (5', 5") umfasst, wobei die Anzahl von Wannenabschnitten (5', 5") der Anzahl von Siebteilabschnitten (9', 9") in dem Siebteil (9) der Trommel (2) entspricht.

## Revendications

1. Désintégrateur à tambour (1) pour faire mousser un matériau fibreux recyclé (F), le désintégrateur à tambour (1) comprenant un tambour (2), le tambour (2) comprenant un carter (10) et une partie moussage (8) suivie d'une partie criblage (9) dans laquelle se poursuit le moussage du matériau fibreux (F) et dans lequel des fibres sont récupérées du matériau fibreux moussé, le carter (10) du tambour (2) étant solide au niveau de la partie moussage (8) et étant muni d'ouvertures (11) au niveau de la partie criblage (9) permettant l'écoulement des fibres hors du tambour à travers les ouvertures (2), le tambour (2) comprenant en outre une extrémité d'alimentation (3) à travers laquelle le matériau fibreux recyclé (F) est introduit dans le tambour (2) et une extrémité de décharge (4) à travers laquelle une partie de rejet du matériau fibreux recyclé (F) est évacuée d'un tambour (2), le désintégrateur à tambour (1) comprenant en outre une cuve (5) sous le tambour (2) pour recevoir les fibres récupérées à partir du matériau fibreux recyclé (F), et dans lequel une longueur de la partie criblage (9) du tambour (2) correspond au moins à cinquante pour cent de la longueur totale du tambour (2), **caractérisé en ce que** une taille des ouvertures (11) dans la partie criblage (9) est agencée pour augmenter vers l'extrémité de décharge de la partie criblage (9).

2. Désintégrateur à tambour selon la revendication 1, **caractérisé en ce que** la longueur de la partie criblage (9) du tambour (2) correspond au moins à 70%, de préférence au moins 90% de la longueur totale du tambour (2).

3. Désintégrateur à tambour selon les revendications 1 ou 2, **caractérisé en ce que** le tambour (2) comprend une zone de mouillage (21) permettant de mouiller le matériau fibreux recyclé (F) introduit dans le tambour (2), la zone de mouillage (21) comprenant une partie mouillage (20) précédant la partie moussage (8), le carter (10) étant solide au niveau de la partie mouillage.

4. Désintégrateur à tambour selon l'une quelconque des revendications précédentes, **caractérisé en ce que** la partie criblage (9) du tambour (2) comprend au moins deux sections de parties criblage (9', 9") successives, la taille des ouvertures (11) dans le carter (10) du tambour (2) étant différente selon des endroits divers (9', 9") de la partie criblage (9).

5. Désintégrateur à tambour selon l'une quelconque des revendications précédentes, **caractérisé en ce que** le tambour (2) comprend un certain nombre d'élévateurs (14) dirigé vers le volume intérieur du tambour (2).

6. Désintégrateur à tambour selon la revendication 4, **caractérisé en ce que** la cuve (5) du désintégrateur à tambour (1) comprend un nombre de portions de cuve (5', 5") séparées les unes des autres, le nombre de portions de cuve (5', 5") correspondant au nombre de sections de la partie criblage (9', 9") dans la partie criblage (9) du tambour (2).
